# EUROPEAN PATENT APPLICATION

(11) **EP 2 653 359 A2**
(43) Date of publication of application: **23.10.2013**
(21) Application number: 13163974.2
(22) Date of filing: 16.04.2013
(51) Int. Cl.: B60S 9/08

(54) **Power drive for landing gear**

(30) Priority: 18.04.2012 US 201261687070 P
(71) Applicant: Ouellet, Jean-Francois, St-Antonin Quebec G0L 2J0 (CA)
(72) Inventor: Ouellet, Jean-Francois, St-Antonin Quebec G0L 2J0 (CA)
(74) Representative: Baker, Karen Veronica

(57) **Abstract**

The power drive includes a housing enclosing a gearing system and a motor. The housing is mounted under the floor of a transport trailer. A drive shaft extends outside the housing for connection in series with a cross shaft of the landing gear of the trailer. A gear shift actuator is mounted in the gearing system for engagement or idling of the gearing system. The gear shift actuator comprises a rod that is movable in and out of the driver side of the housing. A handle lock saddle is mounted to the driver side of the housing for retaining a crank handle of the landing gear thereto. The saddle is centered on the rod such that the rod must be pushed inward for mounting the crank handle to the handle lock saddle. The gearing system is inoperable if the crank handle is not securely stowed to the handle lock saddle.

## Description

### FIELD OF THE INVENTION

This invention pertains to landing gears for transport trailers, and more particularly it pertains to a retrofit power drive unit for mounting in series with the cross shaft of a landing gear system.

### BACKGROUND OF THE INVENTION

Electric, pneumatic and hydraulic drives have been in use for many years to facilitate the operation of landing gears on transport trailers. The following documents provide a good inventory of auxiliary, non-manual drive systems that have been found in the prior art for operating landing gears on transport trailers.
Canadian Patent 1,072,940 issued to Joseph P. Orth et al. on March 04, 1980;
Canadian Patent 2,039,149 issued to R. P. Whittingham on March 14, 1991;
Canadian Patent 2,339,156 issued to J.M. Alguera-Gallego et al. on April 24, 2007;
Canadian Patent 2,531,272 issued to Frank J. Drake, on March 16, 2010;
Canadian Patent Appl. 2,621,342 filed by Giancarlo Brun, on August 14, 2006;
US Patent 2,875,980 issued to K. Grace on March 3, 1959;
US Patent 3,077,120 issued to A.F. Viehweger, jr. on February 12, 1963;
US Patent 3,189,322 issued to C.G. Hadek on June 15, 1965;
US Patent 3,136,527 issued to L. Griffis on June 9, 1964;
US Patent 3,341,179 issued to C.B. Smith on September 12, 1967;
US Patent 4,097,840 issued to Warner A. Chappelle on June 27, 1978;
US Patent 4,116,315 issued to Ervin K. Vandenberg on Sept. 26, 1978;
US Patent 4,129,322 issued to Martin Kuntz, Jr. on December 12, 1978;
US Patent 4,281,852 issued to Raymond L. Konkle on August 4, 1981;
US Patent 4,466,637 issued to Carl A. Nelson on August 21, 1984;
US Patent 5,299,829 issued to B. A. Rivers, Jr. et al., on April 5, 1994;
US Patent 5,451,076 issued to Paul Burkhead on September 19, 1995;
US Patent 6,224,103 issued to Edwin B. Hatcher on May 1, 2001;
US Patent 6,260,882 issued to Richard A. Kingsbury on July 17, 2001;
US Patent 6,896,289 issued to Larry A. Gross on May 24, 2005;
US Patent 6,926,305 issued to Jeffrey Daniel on August 9, 2005;
US Patent 7,163,207 issued to Darryl W. Baird et al. on January 16, 2007;
US Patent 7,311,331 issued to Danny McGlothlin on December 25, 2007;
US Patent 7,429,061 issued to John T. Perkins on September 30, 2008.

Although all the power drive systems of the prior art deserve undeniable merits, these systems are not easily deactivated for use of a conventional hand crank in case of a malfunction of the power drive. In many installations in the prior art, the hand crank is no longer needed and it is often stowed away and lost. It is believed that there is a need in the trucking industry for a better power drive system that is reliable, safe to operate, and that can be easily converted back to a manual operation when the need occurs.

### SUMMARY OF THE INVENTION

In the power drive for landing gear according to the present invention, there is provided; a housing that can be mounted to the floor frame of a transport trailer; a gearing system mounted in that housing and a drive shaft that is included in that gearing system. The drive shaft extends in opposite directions from the housing for connection in series with a cross shaft of the landing gear. The gearing system is operable by an electric motor, although an hydraulic or a pneumatic motor may also be used.

There is also provided a gear shift actuator mounted in the gearing system for engagement of, or for idling the gearing system. The gear shift actuator comprises a rod that protrudes from the housing through the driver side of the housing. This rod is movable in and out of the driver side of the housing. A handle lock saddle is mounted to the driver side of the housing for retaining a crank handle of the landing gear thereto. The lock saddle is centered on the aforesaid protruding rod such that the rod must be pushed inward the driver side of the housing for mounting the crank handle to the handle lock saddle. The gearing system is inoperable if the crank handle is not securely stowed to the handle lock saddle.

On the other hand, when the crank handle is taken out of the handle lock saddle, the gear shift actuator is urged outwardly, causing the idling of the gearing system. The landing gear system can then be operated manually as if the power drive was not present.

In yet another aspect of the present invention, the controls of the landing gear system include switches to prevent the operation of the power drive if the truck is not connected to the trailer or if the cover portion of the housing is not properly mounted in place.

This brief summary has been provided so that the nature of the invention may be understood quickly. A more complete understanding of the invention can be obtained by reference to the following detailed description of the preferred embodiment thereof in connection with the attached drawings.

### BRIEF DESCRIPTION OF THE DRAWINGS

A preferred embodiment of the present invention is illustrated in the accompanying drawings, in which like numerals denote like parts throughout the several views, and in which:
- **FIG. 1**: is a partial cross-section view of a flat bed trailer, showing a preferred installation of the power drive system according to a preferred embodiment of the present invention;
- **FIG. 2**: is a driver side view of the housing of the power drive with a manual crank handle affixed to it;
- **FIG. 3**: is another driver side view of the housing of the power drive with the crank handle removed, and showing a cutaway view inside the housing;
- **FIG. 4**: is a front end view of the housing of the power drive showing another cutaway view inside the housing;
- **FIG. 5**: is a logic diagram of the first preferred control circuit that can be used to operate the preferred power drive;
- **FIG. 6**: is a wiring diagram of a second preferred control circuit that can be used to operate the preferred power drive;
- **FIG. 7**: illustrates an alternate preferred arrangement of a leg displacement monitoring device mounted inside the housing of the preferred power drive.

### DESCRIPTION OF THE PREFERRED EMBODIMENT

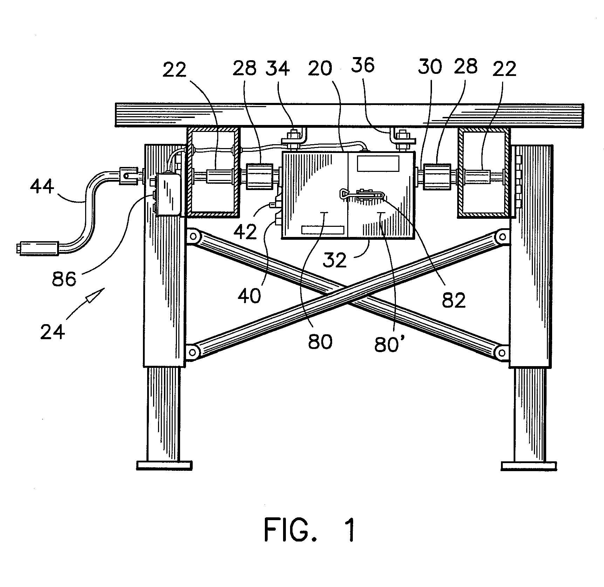

Referring to **FIG. 1****,** the power drive **20** according to the preferred embodiment of the present invention is mounted in series with the cross shaft **22** of the landing gear **24.** The landing gear **24** that is of interest herein is the type that has telescoping legs, a screw jack (not shown) in each leg and a right-angle pinion gear set (not shown) in the upper end of each leg. These pinion gear sets are connected to the cross shaft **22** for simultaneous extension or retraction of the legs by rotation of the cross shaft.

During installation of the power drive **20,** the existing cross shaft **22** is cut and a central segment is removed. The power drive **20** is fitted to the cross shaft **22** with appropriate couplings **28.** For that purpose, the power drive **20** has a drive shaft **30** that is protruding from each side of the housing for connection to the couplings **28** and to the cross shaft **22.** The couplings **28** are selected with proper size and torque rating so that the modified cross shaft 22 has a same or better strength than the original cross shaft.

The housing **32** of the power drive **20** has four suspension bolts **34** extending on its upper surface. The floor frame of the trailer is fitted with spaced-apart angle irons **36** with slots (not shown) to receive the suspension bolts **34,** and to retain the housing **32** to the floor frame of the trailer and to retain the drive shafts **30** of the power drive **20** in alignment with the cross shaft **22.**

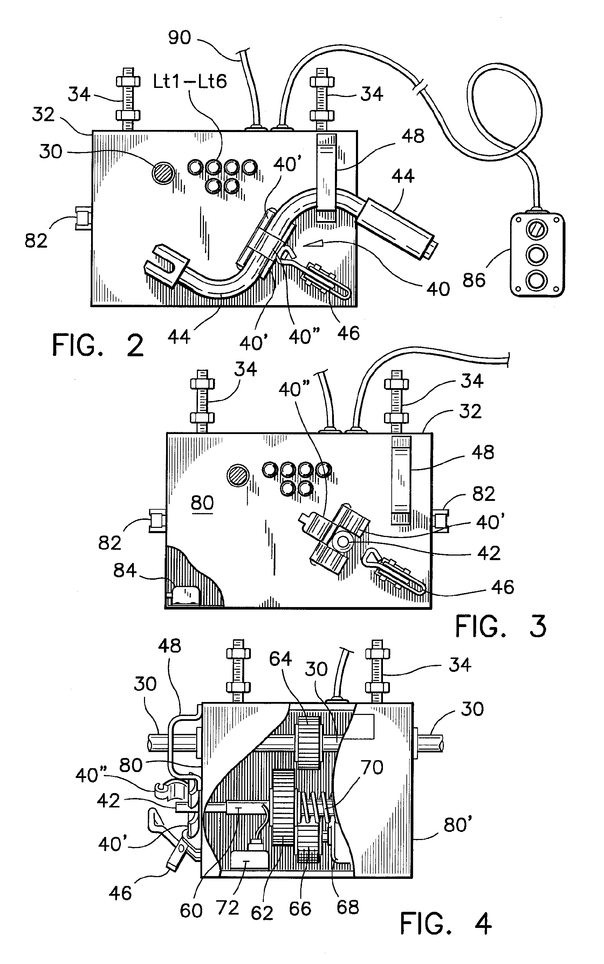

The driver side of the housing **32** has a handle lock saddle **40** mounted thereto. A gear shift actuator rod **42** protrudes through the housing **32** at a mid point in the handle lock saddle **40.** The gearing system of the power drive **20** is engaged only when the crank handle **44** of the landing gear is stowed and retained to the handle lock saddle **40.** The stowing of the crank handle **44** causes the gear shift actuator rod **42** to be pushed in all the way through the lock saddle **40.** The operation of the gear shift actuator **42** will be better understood when looking at **FIGS. 3** and **4****.**

In **FIG. 2****,** the crank handle **44** is shown as being mounted into the handle lock saddle **40.** The handle lock saddle **40** has a cylindrical shape that is made of two curved receiving halves **40'.** The curved receiving halves **40'** have concave surfaces facing outwardly from the driver side of the housing. The two curved receiving halves **40'** are separated by a curved covering piece **40"** that is hinged to the two receiving halves **40'.** The covering piece **40"** has a concave surface facing inward toward the driver side of the housing. The covering piece **40"** is movable between the two receiving halves **40'** to lie in a coaxial alignment with the two receiving halves **40'.** When the central covering piece **40"** is swung inward, it forms with the curved receiving halves **40'** a cylindrical cavity that is a close fit over the shank of the crank handle **44,** for firmly retaining this handle **44** into the lock saddle **40.** A first eccentric latch **46** is used to retain the central covering piece **40"** in a locked position enclosing the handle **44** into the lock saddle **40.** It will be appreciated that although an eccentric latch is illustrated, other latch systems can also be used.

Also in **FIGS. 2, 3, 4** a D-ring anchor **48** can be seen. This D-ring anchor **48** is mounted next to handle lock saddle **40** and it is used for retaining the grip end of the crank handle **44** to the housing **32,** as may be understood from **FIG. 2****.** Referring now to **FIGS. 3** and **4****,** the handle lock saddle **40** is illustrated in the open position. As mentioned herein before, the gear shift actuator rod **42** protrudes through the driver side wall of the housing **32** at the center of the handle lock saddle **40.**

The gear shift actuator rod **42** is an extension of a gear shift shaft **60** on which is mounted an intermediate gear **62.** This intermediate gear **62** is movable along the axis of the gear shift shaft **60** to engage with a driven gear **64** on the drive shaft **30** and a drive gear **66** on an electric motor **68.** It will be appreciated that the gearing system inside the power drive **20** may be more elaborate than illustrated. The intermediate gear **62** is movable along the axis of shaft **60** and it is normally urged away from an engagement with the drive and driven gears **64, 66** by a spring **70.**

As it will be understood, the gear shift actuator rod **42** must be pushed inward to mount the crank handle **44** into the handle lock saddle **40,** thereby causing the intermediate gear **62** to engage with both the drive gear **66** and the driven gear **64.** For more safety, a limit switch **72** is mounted inside the housing **32** and it is connected to the control circuit of the power drive, which will be described later, to monitor the position of the intermediate gear **62.**

The engagement of the intermediate gear **62** and the electric operation of the power drive **20** is only possible when the crank handle **44** is stowed away in the handle lock saddle **40** and the gear shift actuator rod **42** is held inward all the way.

It will be appreciated that the drawing in **FIG. 4** has been simplified for clarity. The mechanism to connect the movement of the push rod **42** and the spring **70** to the intermediate gear **62** can be designed in many other ways. For example, the movement of the push rod **42** can be used to actuate a fork-type lever as in an automotive transmission. The movement of the push rod **42** can be dampened by an axial damper if the gears do not mesh easily together. The movement of the push rod **42** can also be monitored by a switch, and that switch can be used to energize an electric clutch on the intermediate gear **62** in another example. Therefore, the illustration and description of the mechanism in the preferred embodiment should not be limiting the structure of the power drive of the present invention.

Referring back to **FIGS.1****,** **2,** and **3****,** the housing **32** is made of two portions **80, 80'** that are removable to expose the gearing system and the circuit box inside the housing **32.** The removable cover portions **80, 80'**are held to the housing **32** by a pair of eccentric clamps **82,** one on each side of the housing **32.** A second limit switch **84** is positioned inside the housing against one of the removable cover portions **80** and it is connected to the aforesaid control circuit to ensure that the cover portions **80, 80'** are held tightly together before operating the power drive **20.**

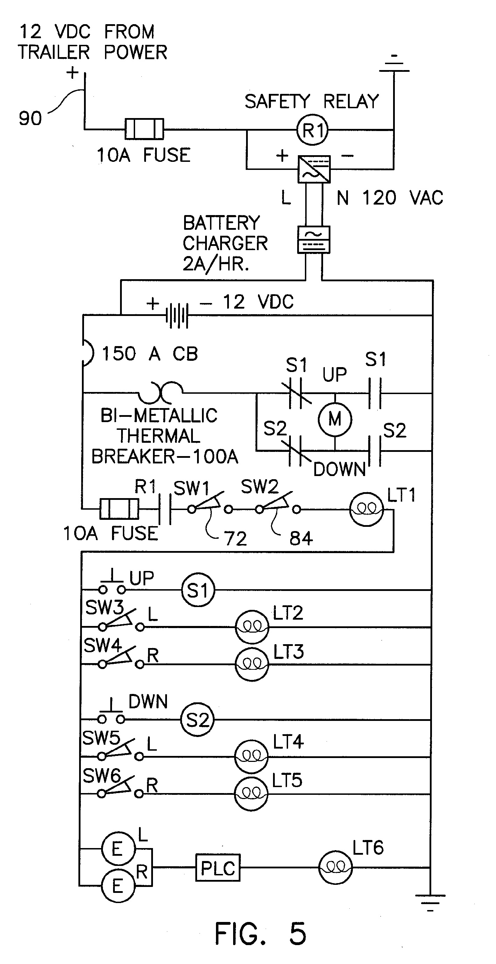

As seen in **FIGS. 1** and **2****,** a control pendant **86** is provided to operate the control circuit of the power drive from a remote location. The logic diagram for the first preferred control circuit is illustrated in **FIG. 5****.**

The first preferred control circuit of the power drive contains two portions which are both enclosed inside the housing **32.** The top portion in the diagram of **FIG. 5** contains a 12 volt power cable **90** from the trailer's electrical system; a 10 amp. fuse, an "ON" relay switch **R1** and a battery charger. The second circuit portion contains a 12 V battery, a 150 amp. circuit breaker and a 100 amp. bimetallic type circuit breaker controlling a pair of solenoid switches **S1** and **S2.** The electric motor **68** is operated forward and reverse, (up and down) by the pair of solenoid switches **S1** and **S2.** Push buttons **UP** and **DWN** on the pendant **86** are protected by a 10 amp. fuse, and are enabled by the "ON" relay switch **R1**, and by the limit switches **SW1- 72** and **SW2 - 84** which were described earlier. Limit switches **SW1** and **SW2** are preferably moisture-resistant magnetic type switches. Another keylock switch may be incorporated in the pendant **86** for convenience.

A first pilot light **Lt1** on the driver side of the housing **32** indicates that the power drive **20** is connected to a source of electrical power. A series of limit switches **SW3, SW4, SW5, SW6** are provided in or on the legs of the landing gear and additional visual indicators **Lt2, Lt3, Lt4, Lt5** are also provided on the driver side of the housing **32** to indicate the "legs fully up" position and "legs fully down" positions. Limit switches **SW3, SW4, SW5, SW6** are also preferably moisture-resistant magnetic type switches.

A pair of encoders **E** are also included, one in each leg of the landing gear, to monitor an even raising or an even descending of the legs of the landing gear. The encoders **E** are connected to a programmable logic controller **PLC** and to a light **Lt6.** The light **Lt6** indicates an improper operation of the legs, either by a broken cross shaft **22,** a damaged coupling **28** or other failure or malfunction of that nature.

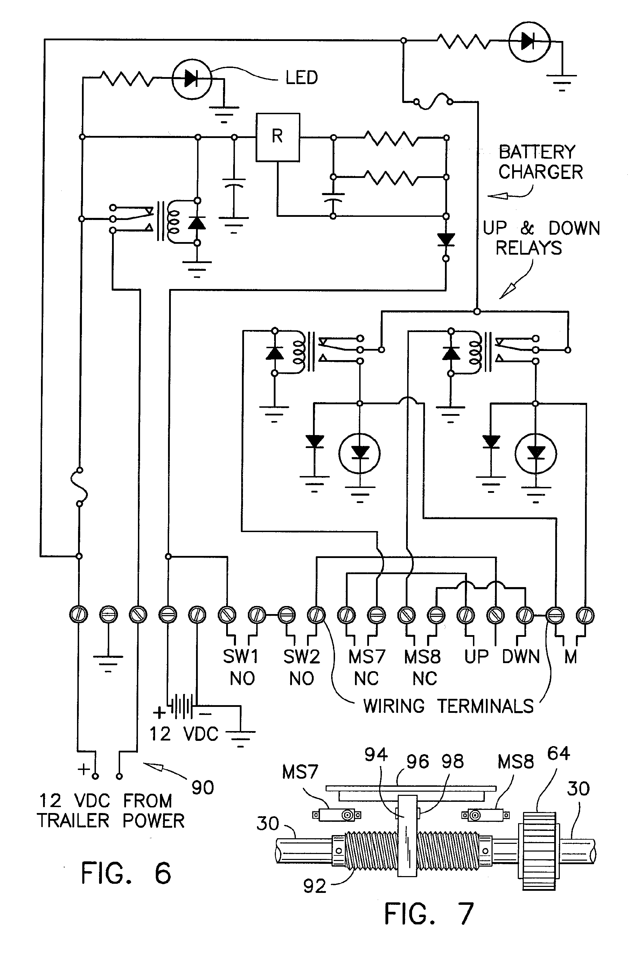

An alternate control circuit for operating the power drive is illustrated in **FIG. 6****.** This alternate circuit is preferably included in a printed circuit board that is enclosed inside the housing **32.** Again, a schematic illustration of this alternate circuit is illustrated in **FIG. 6** to facilitate the understanding of the operation thereof. The actual circuit to be used in a commercial version thereof may contain many more components.

The second preferred circuit contains a battery charger, including a voltage and amperage regulator **R,** and a pair of relays controlling the forward and reverse rotations of the motor **68.** These relays are referred to on the drawing as the up and down relays.

This second preferred circuit is different from the first one illustrated in **FIG. 5****,** basically, in the fact that the limit switches **SW3, SW4, SW5,** and **SW6** for the legs up or down signals have been eliminated. In the second preferred circuit, the monitoring of the leg movements is effected by a leg displacement monitoring device which is partly illustrated in **FIG. 7****.** The leg movement monitoring device is made of a threaded sleeve **92** that is affixed over to the drive shaft **30,** for rotation with the drive shaft. A threaded follower block **94** is mounted to the threaded sleeve **92** for movement along the threaded sleeve **92.** The follower block **94** is guided against a guide rail **96** for movement along the drive shaft **30.** When the drive shaft **30** rotates, the follower block **94** moves sideways a displacement that is proportional to the extent of extension or retraction of the legs of the landing gear. The follower block **94** has a pair of magnets **98** mounted thereon. The end-of-travel limits of the follower block **98** are monitored by a pair of magnetic switches **MS7** and **MS8.**

The magnetic switches **MS7** and **MS8** are located along the guide rail **100** and are spaced apart a distance that corresponds to the limits of the legs up and legs down movements. These switches are connected to the printed circuit board in a "normally closed" **NC** state in order to de-energize the electric motor **M** at the limits of the leg displacements.

It will be appreciated that the features in one preferred circuit can be used in the other one. For example, the leg displacement monitoring device as partly illustrated in **FIG. 7** can be used with the first preferred circuit illustrated in **FIG. 5****,** and the encoders on the legs of the landing gear can be used with the circuit board as illustrated in **FIG. 6****.** Also, the safety relay **R1** in the first preferred diagram, or the pendant **86** can also be incorporated in the circuit shown in **FIG. 6****.**

As to other details and manner of operation of the power drive according to the present invention, the same should be apparent from the above description and drawings, and accordingly further discussion related to these aspects is deemed unnecessary.

The power drive system according to the preferred embodiment of the present invention has been illustrated herein in a schematic manner for clarity. Many components of this system were not illustrated to facilitate the understanding of the basic concept of this invention. The components that were not illustrated are those for which the nature, the mounting and functions would be obvious to the persons skilled in the art of electronics and machine design in general. Similarly, the physical dimensions, material types and manufacturing tolerances are not provided because these details are considered obvious to the skilled artisan.

## Claims

1. An power drive for a transport trailer landing gear system comprising:
a housing; a gearing system including a motor, mounted in said housing, and a drive shaft mounted to said gearing system and extending through the sides of said housing in opposite directions for connection in series with a cross shaft of a landing gear system;
a gear shift actuator mounted in said gearing system for selective engagement or idling of said gearing system; said gear shift actuator comprising a rod protruding through a driver side of said housing and being movable in and out of said driver side;
a handle lock saddle mounted to said driver side of said housing for retaining a crank handle of a landing gear system in a stowed position to said driver side of said housing; said handle lock saddle being positioned on said driver side of said housing such that said rod is protruding through a mid-point thereof, and such that a crank handle is mountable in said handle lock saddle by moving said rod inward relative to said driver side.

2. The power drive as claimed in **claim 1,** wherein said gearing system comprises a driven gear on said drive shaft; a drive gear on said motor, and an intermediate gear on said gear shift actuator, and said intermediate gear being movable with said rod between a first position being engaged with said drive gear and said driven gear, and a second position being disengaged from said driven gear and said drive gear.

3. The power drive as claimed in **claim 1,** wherein said gear shift actuator is a longitudinal shaft and said intermediate gear is movable along an axis of said longitudinal shaft.

4. The power drive as claimed in **claim 1,** wherein said rod is urged toward said driver side by a spring.

5. The power drive as claimed in **claim 3,** further comprising a first limit switch mounted in said housing for monitoring a position of said intermediate gear.

6. The power drive as claimed in **claim 1,** wherein said drive shaft has a threaded sleeve mounted thereon and a threaded block mounted on said threaded sleeve; said housing has a rail attached thereto for guiding said threaded block along a path parallel to said drive shaft when said drive shaft is rotating; said housing also including a pair of limit switches mounted thereto for monitoring end-of-travel positions of said threaded block along said threaded sleeve.

7. The power drive as claimed in **claim 6,** wherein a displacement of said threaded block between said limit switches is proportional to an extension or retraction of the legs in a landing gear.

8. The power drive as claimed in **claim 1,** further comprising a battery mounted in said housing for operating said motor.

9. The power drive as claimed in **claim 1,** wherein said housing further has suspension bolts extending from an upper surface thereof for retaining said housing to the floor frame of a transport trailer.

10. The power drive as claimed in **claim 1,** wherein said handle lock saddle comprises two spaced apart curved receiving halves each having a concave curvature facing outward from said driver side of said housing, and one curved covering piece having a concave curvature facing inward toward said driver side of said housing, said curved covering piece being mounted between said curved receiving halves and being hinged to said curved receiving halves for movement into a coaxial alignment with said curved receiving halves and for selectively forming with said curved receiving halves a cylindrical cavity having a close fit dimension over a shank portion of a crank handle.

11. The power drive as claimed in **claim 10,** wherein said housing also has a D-ring anchor mounted on said driver side thereof, for receiving a grip portion of a crank handle.

12. A power drive for operating a transport trailer landing gear system comprising:
a housing; a gearing system including a motor, mounted in said housing and a drive shaft mounted to said gearing system and extending through the walls of said housing in opposite directions for connection in series with a cross shaft of a landing gear system
a gear shift actuator mounted in said gearing system for selective engagement or idling of said gearing system; said gear shift actuator comprising a rod protruding through a driver side of said housing and being movable in and out of said driver side; said rod being urged toward said driver side by a spring;
a handle lock saddle mounted to said driver side of said housing for retaining a crank handle of a landing gear system in a stowed position to said driver side of said housing; said handle lock saddle being positioned on said driver side of said housing such that said rod is protruding through a mid-point thereof, and such that a crank handle is mountable to said handle lock saddle by moving said rod inward relative to said driver side;
said handle lock saddle comprising two spaced apart curved receiving halves each having a concave curvature facing outward from said driver side of said housing, and one curved covering piece having a concave curvature facing inward toward said driver side of said housing, said curved covering piece being mounted between said curved receiving halves and being hinged to said curved receiving halves for movement into a coaxial alignment with said curved receiving halves, and for selectively forming with said curved receiving halves a cylindrical cavity having a close fit dimension over a shank portion of a crank handle.

13. The power drive as claimed in **claim 12,** wherein said gearing system comprises a driven gear on said drive shaft; a drive gear on said motor, and an intermediate gear on said gear shift actuator, and said intermediate gear being movable with said rod between a first position being engaged with said drive gear and said driven gear, and a second position being disengaged from said driven gear and said drive gear.

14. The power drive as claimed in **claim 12,** wherein said gear shift actuator is a longitudinal shaft and said intermediate gear is movable along an axis of said longitudinal shaft.

15. A landing gear system on a transport trailer, including:
a pair of telescopic legs; a cross shaft extending between said telescoping legs, and a power drive connected in series with said cross shaft for operating said telescoping legs; said power drive comprising;
a housing; a gearing system including a motor mounted in said housing and a drive shaft mounted to said gearing system and extending through the side walls of said housing in opposite directions, said housing having suspension bolts on a top portion thereof; said suspension bolts being affixed to the floor frame of said transport trailer, and said drive shaft being connected in series with said cross shaft;
a gear shift actuator mounted in said gearing system for selective engagement or idling of said gearing system; said gear shift actuator comprising a rod protruding through a driver side of said housing and being movable in and out of said driver side;
a handle lock saddle mounted to said driver side of said housing for retaining a crank handle of said landing gear system in a stowed position to said driver side of said housing; said handle lock saddle being positioned on said driver side of said housing such that said rod is protruding through a mid-point thereof, and such that a crank handle is mountable to said handle lock saddle by moving said rod inward relative to said driver side, and
said gearing system comprises a driven gear on said drive shaft; a drive gear on said motor, and an intermediate gear on said gear shift actuator, and said intermediate gear being movable with said rod between a first position being engaged with said drive gear and said driven gear, and a second position being disengaged from said driven gear and said drive gear.
